# EUROPEAN PATENT APPLICATION

(11) **EP 4 567 763 A1**
(43) Date of publication of application: **11.06.2025**
(21) Application number: 24214714.8
(22) Date of filing: 22.11.2024
(51) Int. Cl.: G08B 17/12, G08B 29/18

(54) **A FLAME DETECTION SYSTEM AND A METHOD THEREOF**

(30) Priority: 08.12.2023 IN 202311083840
(71) Applicant: Life Safety Distribution GmbH, 1180 Rolle (CH)
(72) Inventor: KOTHARI, Sanjay, Charlotte, 28202 (US); KHURANA, Mohit, Charlotte, 28202 (US); VARTAK, Sameer Dinkar, Charlotte, 28202 (US)
(74) Representative: Haseltine Lake Kempner LLP

(57) **Abstract**

A flame detection system is disclosed. The flame detection system comprises at least one monitoring device comprising at least one primary flame detector configured to detect one or more infrared (IR) signals from a monitoring zone, and at least one secondary flame detector configured to detect one or more IR signals from a flame zone. Further, one or more processors are communicatively coupled to the at least one monitoring device. The one or more processors are configured to receive the detected one or more IR signals from the monitoring zone and the flame zone, correlate the one or more IR signals from the monitoring zone with the one or more IR signals from the flame zone based at least on time and frequency domain of the detected one or more IR signals, and determine a status of flame within the monitoring zone based at least on the correlation.

## Description

### TECHNOLOGICAL FIELD

An example embodiment relates generally to flame detection systems and, more particularly, to a flame detection system and a method thereof.

### BACKGROUND

Flame detection systems are point detectors that use a single pixel non-imaging detectors to collect light from all directions within a field of view (FOV) and subsequently utilize multiple algorithms to identify flames, false alarms, or flame in presence of a false alarm. The flame detection systems play an important role in identifying potential fire hazards and triggering timely responses to mitigate the risk of catastrophic events. However, a significant challenge arises from the current limitations of existing flame detection systems. The prevailing issue with the existing flame detection systems lies in the inability to distinguish between different types of fires, specifically the inability to differentiate between friendly or known fires and hazardous or dangerous fires. Traditional flame detection systems are designed to trigger alarms upon detecting any form of combustion, irrespective of the fire's nature or source. In many industrial processes, friendly fires may be a routine part of operations, such as in controlled burn-offs or specific manufacturing processes. The friendly fires are reflected from various objects such as steel pipes or plastics in the many industrial processes. Current flame detection systems are unable to differentiate between the friendly flames and unforeseen, hazardous fires, often leading to false alarms, unnecessary disruptions, and increased operational downtime.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a flame detection system is disclosed. The flame detection system comprises at least one monitoring device comprising at least one primary flame detector configured to detect one or more infrared (IR) signals from a monitoring zone. Further, the at least one monitoring device comprising at least one secondary flame detector configured to detect one or more IR signals from a flame zone. Further, one or more processors are communicatively coupled to the at least one monitoring device. The one or more processors are configured to receive the detected one or more IR signals from the monitoring zone and the flame zone, correlate the one or more IR signals from the monitoring zone with the one or more IR signals from the flame zone based at least on time and frequency domain of the detected one or more IR signals, and determine a status of flame within the monitoring zone based at least on the correlation.

In some embodiments, the monitoring zone corresponds to a zone where hazardous flame could exist and the flame zone corresponds to a zone where friendly flame is present. In some embodiments, the status of flame corresponds to existence of the hazardous flame or a reflection of the friendly flame. In some embodiments, the hazardous flame is determined in the monitoring zone based on a low correlation between the one or more IR signals from the monitoring zone and the one or more IR signals from the flame zone. Further, the reflection of the friendly flame is determined in the monitoring zone based on a high correlation between the one or more IR signals from the monitoring zone and the one or more IR signals from the flame zone.

In some embodiments, the correlated one or more IR signals correspond to a partially correlated one or more IR signals. In some embodiments, the one or more processors are configured to analyze the partially correlated one or more IR signals and determine the hazardous flame or the reflection of the friendly flame based on the analyzed partially correlated one or more IR signals. In some embodiments, the analyzed partially correlated one or more IR signals above a hazardous flame threshold value correspond to the hazardous flame and the analyzed partially correlated one or more IR signals below the hazardous flame threshold value correspond to the reflection of the friendly flame.

In some embodiments, upon detecting the highly correlated one or more IR signals, the one or more processors are configured to not actuate or prevent actuation of an alarm. In some embodiments, upon detecting the low correlated one or more IR signals, the one or more processors are configured to actuate the alarm. In some embodiments, the alarm corresponds to a visual alarm, an audio alarm, or a notification alarm.

In some embodiments, the correlation of the one or more IR signals is based at least on one or more metrics such as signal amplitudes at different frequencies, peaks and troughs in time domain. In some embodiments, the at least one secondary flame detector is mounted onto the at least one primary flame detector or proximate to the at least one primary flame detector. In some embodiments, the at least one primary flame detector and the at least one secondary flame detector corresponds to a multi spectrum IR flame detector, an ultra-violet (UV) detector, a visible (VIS) detector, or an Infrared (IR) detector. In some embodiments, the at least one secondary flame detector is configured to align a field of view (FOV) towards the flame zone, and the at least one secondary flame detector is configured to have a narrow FOV to cover the flame zone.

In another example embodiment, a flame detection system is disclosed. The flame detection system comprises at least one monitoring device configured to detect one or more infrared (IR) signals from a monitoring zone and a flame zone. Further, one or more processors are communicatively coupled to the at least one monitoring device. The one or more processors are configured to receive the detected one or more IR signals from the monitoring zone and the flame zone, correlate the one or more IR signals from the monitoring zone with the one or more IR signals from the flame zone based at least on time and frequency domain of the detected one or more IR signals, and determine a status of flame within the monitoring zone based at least on the correlation.

In some embodiments, the at least one monitoring device corresponds to a camera based flame detector. In some embodiments, the at least one monitoring device is configured to identify the monitoring zone and the flame zone within a field of view (FOV) by using Artificial intelligence (AI) and Machine learning (ML) techniques.

In another example embodiment, a flame detection method is disclosed. The flame detection method comprises steps of detecting, via at least one primary flame detector, one or more infrared (IR) signals from a monitoring zone; detecting, via at least one secondary flame detector mounted onto the at least one primary flame detector, one or more infrared (IR) signals from a flame zone; receiving, via one or more processors, the detected one or more IR signals from the monitoring zone and the flame zone; correlating, via the one or more processors, the one or more IR signals from the monitoring zone with the one or more IR signals from the flame zone based at least on time and frequency domain of the detected one or more IR signals; and determining, via the one or more processors, a status of flame within the monitoring zone based at least on the correlation.

In some embodiments, the method further comprises determining the correlation of the one or more IR signals above or below a hazardous flame threshold value, upon detecting partially correlated one or more IR signals. Further, the method comprises determining presence of flame within the monitoring zone, upon detecting the correlation of the one or more IR signals above the hazardous flame threshold value and determining absence of flame within the monitoring zone, upon detecting the correlation of the one or more IR signals below the hazardous flame threshold value.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1A illustrates an example embodiment of a flame detection system, in accordance with an example embodiment of the present disclosure;
FIG. 1B illustrates a detailed block diagram of the flame detection system, in accordance with an example embodiment of the present disclosure;
FIG. 2 illustrates an exemplary scenario of the flame detection system, in accordance with an example embodiment of the present disclosure;
FIG. 3 illustrates an exemplary embodiment of at least one monitoring device of the flame detection system, in accordance with another example embodiment of the present disclosure;
FIG. 4 illustrates one or more IR signals detected by the flame detection system, in accordance with an example embodiment of the present disclosure; and
FIG. 5 illustrates a flowchart of a method of the flame detection system, in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of systems and methods of flame detection. Various embodiments may include at least one primary flame detector and at least one secondary flame detector to detect one or more infrared (IR) signals from a monitoring zone and a flame zone, respectively. Other embodiments may include a camera based flame detector to detect one or more IR signals from the monitoring zone and the flame zone. Embodiments may be configured to differentiate between friendly fires and hazardous fires. Embodiments may offer high-resolution thermal imaging to enable precise identification of flames. Embodiments may detect subtle temperature changes and spatial variations to allow for quick and accurate flame detection, to precisely identify and differentiate between the friendly fires and the hazardous fires in critical environments. Embodiments may provide real-time monitoring capability to ensure immediate response to the friendly flames and the hazardous flames, facilitating rapid intervention and minimizing potential damage. Additionally, embodiments may be integrated into various settings, from industrial facilities to fire detection systems, providing robust and reliable flame detection solutions for improved fire safety and reduced risks to life and property.

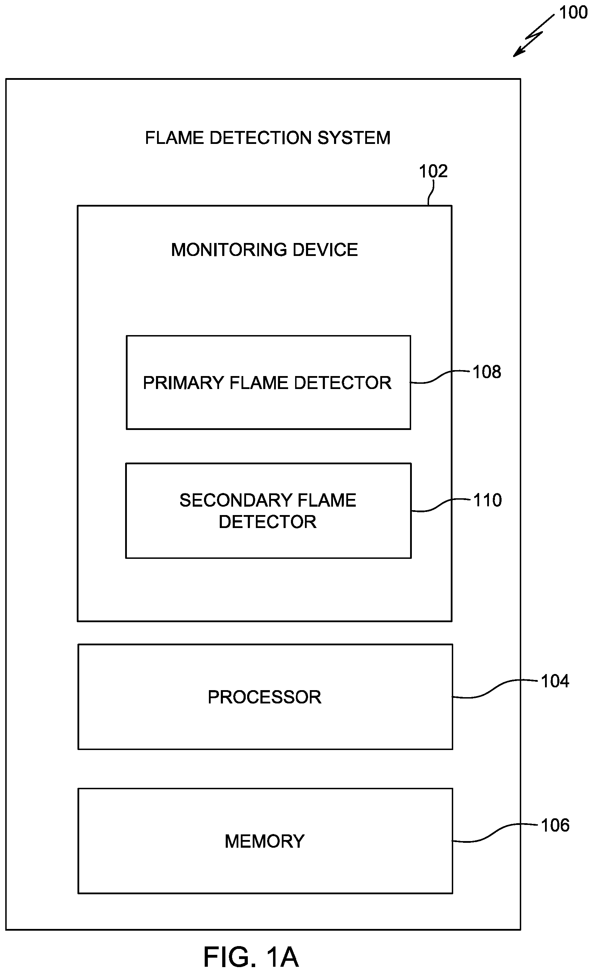

FIG. 1A illustrates an example embodiment of a flame detection system 100, in accordance with an example embodiment of the present disclosure. The flame detection system 100 may comprise at least one monitoring device 102, one or more processors 104, and a memory 106.

In some embodiments, the at least one monitoring device 102 may include at least one primary flame detector 108 and at least one secondary flame detector 110. The at least one primary flame detector 108 and the at least one secondary flame detector 110 may correspond to a multi spectrum IR flame detector, an ultra-violet (UV) detector, a visible (VIS) detector, or an Infrared (IR) detector. The at least one primary flame detector 108 may be configured to detect one or more infrared (IR) signals from a monitoring zone (not shown). The monitoring zone may correspond to a zone where hazardous flame could exist, and the existence is desired to be detected. The at least one secondary flame detector 110 may be configured to detect one or more IR signals from a flame zone (not shown). The flame zone may correspond to a zone where friendly flame is present. The at least one primary flame detector 108 and the at least one secondary flame detector 110 may be configured to analyze a field of view (FOV) (not shown) of the monitoring zone and a FOV (not shown) of the flame zone, respectively.

Further, the at least one secondary flame detector 110 may be mounted onto the at least one primary flame detector 108. The at least secondary flame detector 110 may rotate in any direction. In an alternative embodiment, the at least one primary flame detector 108 may be mounted onto the at least one secondary flame detector 110 or proximate to the at least one secondary flame detector 110. The at least one primary flame detector 108 and at least one secondary flame detector 110 may detect one or more IR signals received from the monitoring zone and the flame zone, respectively. In some embodiments, the at least one primary flame detector 108 and the at least one secondary flame detector 110 may be positioned far away from each other as long as the at least one primary flame detector 108 is monitoring the monitoring zone and the at least one secondary flame detector 110 is monitoring the flame zone. It will be apparent to one skilled in the art that the at least one primary flame detector 108 and at least one secondary flame detector 110 may measure thermal radiation or infrared (IR) emissions from the detected one or more IR signals, within the FOV.

In some embodiments, the one or more IR signals from the monitoring zone, detected by the at least one primary flame detector 108 may be the one or more IR signals from the flame zone that are reflected from an object (not shown) present in the monitoring zone. In some embodiments, the detected one or more IR signals may be filtered, via a software high pass filter (not shown) to remove any noise from the one or more IR signals. It will be apparent to one skilled in the art that the software high pass filter is used to clean up low-frequency noise in the one or more IR signals. For example, the detected one or more IR signals may be filtered via the software high pass filter having cut-off of 2 hertz (Hz).

The flame detection system 100 may further comprise the one or more processors 104. The one or more processors 104 may be communicatively coupled to the at least one monitoring device 102. Further, the one or more processors 104 may receive the detected one or more IR signals from the monitoring zone and the flame zone. Further, the one or more processors 104 may correlate the one or more IR signals from the monitoring zone with the one or more IR signals from the flame zone. It may be noted that the one or more processors 104 may correlate based at least on time and frequency domain of the detected one or more IR signals. Thereafter, the one or more processors 104 may determine a status of flame within the monitoring zone based at least on the correlation. The status of flame may correspond to the existence of hazardous flame or a reflection of the friendly flame.

In various example embodiments, the one or more processors 104 may include suitable logic, circuitry, and/or interfaces that are operable to execute one or more instructions stored in the memory 106 to perform predetermined operations. In some embodiments, the one or more processors 104 may be configured to decode and execute any instructions received from one or more other electronic devices or server(s). The one or more processors 104 may be configured to execute one or more computer-readable program instructions, such as program instructions to carry out any of the functions described in this description. Further, the one or more processors 104 may be implemented using one or more processor technologies known in the art. Examples of the processor include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

Further, the memory 106 may store a set of instructions and data. In some embodiments, the memory 106 may include the one or more instructions that are executable by the processor to perform specific operations. It is apparent to a person with ordinary skill in the art that the one or more instructions stored in the memory 106 enable the hardware of the system to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

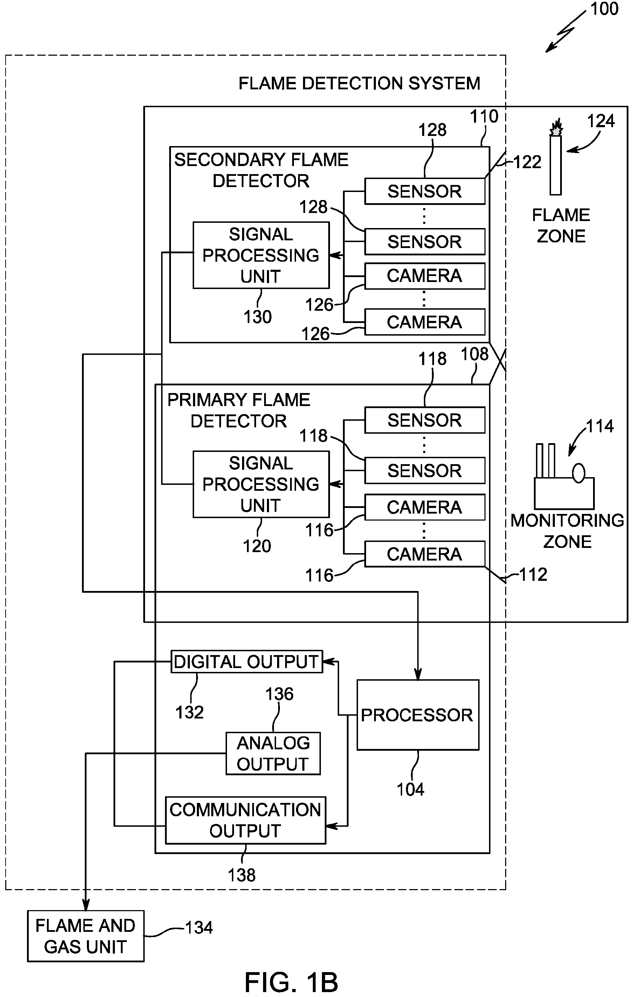

FIG. 1B illustrates a detailed block diagram of the flame detection system 100, in accordance with an example embodiment of the present disclosure. FIG. 1B is described in conjunction with FIG. 1A.

As discussed above in FIG. 1A, the at least one monitoring device 102 may include at least one primary flame detector 108 and at least one secondary flame detector 110.

In some embodiments, the at least one primary flame detector 108 may include a plurality of cameras to capture one or more images in a field of view (FOV) 112 of a monitoring zone 114. In some embodiments, the monitoring zone 114 may correspond to a zone where hazardous flame could exist, and the existence is desired to be detected. Further, the plurality of cameras may include N number of cameras 116. The one or more images may include precise recording of scenes or subjects that are to be protected in the FOV 112. It may be noted that the FOV 112 may correspond to an observable area that an individual may visualize via the plurality of cameras. In some embodiments, the plurality of cameras may include at least a dual infrared (IR) camera or any other cameras known in the art to detect the one or more IR signals. The plurality of cameras may include various capturing modes and storage options. The plurality of cameras may enable sharing of visual data in the form of captured one or more images.

In some embodiments, the at least one primary flame detector 108 may include a plurality of sensors. Further, the plurality of sensors may include N number of sensors 118. The plurality of sensors may be communicatively coupled to the plurality of cameras. In some embodiments, the plurality of sensors may include one or more infrared (IR) sensors, flame sensors, or photodiodes. The plurality of sensors may be configured to analyze the FOV 112 of the monitoring zone 114. Further, the plurality of sensors may detect the one or more IR signals from the monitoring zone 114.

In some embodiments, the plurality of cameras and the plurality of sensors may be spatially calibrated to analyze the flame within the FOV 112 of the monitoring zone 114. Further, the spatial calibration may include the process of aligning and synchronizing data from the plurality of cameras and the plurality of sensors to accurately detect the one or more IR signals from the monitoring zone 114 within the FOV 112. In one example, a dual IR camera and an IR sensor may be spatially calibrated to precisely detect the one or more IR signals from the monitoring zone 114 within the FOV 112. Further, the spatial calibration may ensure that the one or more images captured by the plurality of cameras and the one or more IR signals detected from the captured one or more images by the plurality of sensors correspond to the same region of interest, and thus allow for accurate flame detection.

In some embodiments, the detected one or more IR signals from the monitoring zone 114 may be processed using a signal processing unit 120. Further, a spectral band of the detected one or more IR signals using the at least one primary flame detector 108 may be centered on CO₂ and H₂O emission peaks by the signal processing unit 120. It is apparent to one skilled in the art that the spectral bands are regions of a given spectrum of the one or more IR signals, having a specific range of wavelengths or frequencies. The spectral band for the at least one primary flame detector 108 may be centered to respond only to one or more IR signals with a high signal to noise ratio (SNR). It is apparent to one skilled in the art that the higher SNR ratio indicates that the one or more IR signal level is greater than the noise level present in the one or more IR signals. Further, higher SNR ratio may ensure that the detected one or more IR signals may have least noise level. As a result, the signal processing unit 120 may provide processed one or more IR signals from the monitoring zone 114 as an output.

In some embodiments, the at least one secondary flame detector 110 may include a plurality of cameras to capture one or more images in a field of view (FOV) 122 of a flame zone 124. In some embodiments, the flame zone 124 may correspond to a zone where friendly flame is present. Further, the at least one secondary flame detector 110 may be configured to align the FOV 122 towards the flame zone 124. Further, the FOV 122 of the at least one secondary flame detector 110 may be a narrow FOV to only cover the flame zone 124.

In some embodiments, the plurality of cameras may include N number of cameras 126. The one or more images may include precise recording of scenes or subjects that are to be protected in the FOV 122. It may be noted that the FOV 122 may correspond to an observable area that an individual may visualize via the plurality of cameras. In some embodiments, the plurality of cameras may include at least a dual infrared (IR) camera or any other cameras known in the art to detect the one or more IR signals. The plurality of cameras may include various capturing modes and storage options. The plurality of cameras may enable sharing of visual data in the form of captured one or more images.

In some embodiments, the at least one secondary flame detector 110 may include a plurality of sensors. Further, the plurality of sensors may include N number of sensors 128. The plurality of sensors may be communicatively coupled to the plurality of cameras. In some embodiments, the plurality of sensors may include one or more infrared (IR) sensors, flame sensors, or photodiodes. The plurality of sensors may be configured to analyze the FOV 122 of the flame zone 124. The plurality of sensors may detect the one or more IR signals from the flame zone 124.

In some embodiments, the plurality of cameras and the plurality of sensors may be spatially calibrated to analyze the flame within the FOV 122 of the flame zone 124. Further, the spatial calibration may include the process of aligning and synchronizing data from the plurality of cameras and the plurality of sensors to accurately detect the one or more IR signals from the flame zone 124 within the FOV 122. In one example, a dual IR camera and an IR sensor may be spatially calibrated to precisely detect the one or more IR signals from the flame zone 124 within the FOV 122. Further, the spatial calibration may ensure that the one or more images captured by the plurality of cameras and the one or more IR signals detected from the captured one or more images by the plurality of sensors correspond to the same region of interest, and thus allow for accurate flame detection.

In some embodiments, the detected one or more IR signals from the flame zone 124 may be processed using a signal processing unit 130. Further, a spectral band of the detected one or more IR signals using the at least one secondary flame detector 110 may be centered on CO₂ and H₂O emission peaks by the signal processing unit 130. The spectral band for the at least one secondary flame detector 110 may be centered to respond only to one or more IR signals with the high signal to noise ratio (SNR). Further, higher SNR ratio may ensure that the detected one or more IR signals may have least noise level. As a result, the signal processing unit 130 may provide processed one or more IR signals from the flame zone 124 as an output.

In some embodiments, the spectral band for the at least one primary flame detector 108 may be same as the spectral band of the at least one secondary flame detector 110 to correlate the one or more IR signals from the monitoring zone 114 and the one or more IR signals from the flame zone 124. The one or more processors 104 may be configured to correlate the processed one or more IR signals from the monitoring zone 114 and the processed one or more IR signals from the flame zone 124. The one or more processors 104 may correlate the one or more IR signals based at least on time and frequency domain of the one or more IR signals from the monitoring zone 114 and the one or more IR signals from the flame zone 124. It may be noted that at least one time domain and frequency domain correlation factor may be derived using an algorithm to correlate the one or more IR signals. In some embodiments, the correlation of the one or more IR signals may be based at least on one or more metrics such as signal amplitudes at different frequencies, peaks and troughs in time domain. For example, if the peaks and troughs of the one or more IR signals from the monitoring zone 114 are correlated in time domain with peaks and troughs of the one or more IR signals from the flame zone 124, may indicate that the peaks and troughs occur at the same time on both the one or more IR signals. In some embodiments, the correlation of the one or more IR signals may be based at least on one or more metrics such as spectral content at different frequencies in frequency domain. Further, if the spectral content of the one or more IR signals from the monitoring zone 114 and the one or more IR signals from the flame zone 124 are similar, then both the one or more IR signals may have similar frequencies and as a result, relative amplitudes of the one or more IR signals may correlate. For example, if both the one or more IR signals from the monitoring zone 114 and the one or more IR signals from the flame zone 124 have peaks at 5Hz and 15Hz respectively with similar relative amplitude, then the one or more IR signals from the monitoring zone 114 and the one or more IR signals from the flame zone 124 are co-related. Thereafter, the one or more processors 104 may determine a status of flame within the monitoring zone based at least on the correlation.

In some embodiments, the status of flame may correspond to the existence of hazardous flame or a reflection of the friendly flame. Further, the hazardous flame may be determined in the monitoring zone 114 based on a low correlation between the one or more IR signals from the monitoring zone 114 and the one or more IR signals from the flame zone 124. Further, the reflection of the friendly flame may be determined in the monitoring zone 114 based on a high correlation between the one or more IR signals from the monitoring zone 114 and the one or more IR signals from the flame zone 124. In some example embodiments, the high correlation may indicate a correlation above 70% between the one or more IR signals from the monitoring zone 114 and the one or more IR signals from the flame zone 124, In some example embodiments, the low correlation may indicate a correlation less than 30% between the one or more IR signals from the monitoring zone 114 and the one or more IR signals from the flame zone 124.

In some embodiments, the correlated one or more IR signals may correspond to a partially correlated one or more IR signals. In some example embodiments, the partial correlation may indicate a correlation in a range of 30% to 70% between the one or more IR signals from the monitoring zone 114 and the one or more IR signals from the flame zone 124. Further, the one or more processors 104 may be configured to analyze the partially correlated one or more IR signals. Further, the one or more processors 104 may determine the existence of hazardous flame or the reflection of the friendly flame based on the analyzed partially correlated one or more IR signals. Further, the analyzed partially correlated one or more IR signals above a hazardous flame threshold value may correspond to the hazardous flame. Further, the analyzed partially correlated one or more IR signals below the hazardous flame threshold value may correspond to the reflection of the friendly flame. It may be noted that the hazardous flame threshold value may be a value above which the flame may be considered as the hazardous flame and below which the flame may be considered as the friendly flame or the reflection of the friendly flame. The hazardous flame threshold value may correspond to one or more IR signatures of the one or more IR signals from the monitoring zone 114 and the one or more IR signals from the flame zone 124. The one or more IR signatures may include at least flicker frequencies, spectral content, and the ratios of different wavelengths of the one or more IR signals from the monitoring zone 114 and the one or more IR signals from the flame zone 124. For example, the hazardous flame threshold value may be considered as 40 Hz flicker frequency.

In some embodiments, the one or more processors 104 may be configured to not actuate or prevent actuation of an alarm, upon detecting the highly correlated one or more IR signals. Further, the one or more processors 104 may be configured to actuate the alarm upon detecting the low correlated one or more IR signals. In one example, if the reflection of the friendly flame is determined in the monitoring zone 114, the one or more processors 104 may not actuate or prevent the actuation of the alarm. In another example, if the hazardous flame is determined in the monitoring zone 114, the one or more processors 104 may actuate the alarm. In some embodiments, the alarm may correspond to a visual alarm, an audio alarm, or a notification alarm.

The flame detection system 100 may further include the at least one digital output 132. The at least one digital output 132 may be coupled to the one or more processors 104. The at least one digital output 132 may generate temperature-related information in a discrete digital format. In some embodiments, the at least one digital output 132 may exist in binary form, representing temperature states as 1s and 0s. The temperature states may be easily processed and interpreted by digital devices such as microcontrollers, computers, or data acquisition systems. In some embodiments, the at least one digital output 132 may include a relay (not shown). Further, the at least one digital output 132 may allow precise temperature monitoring, triggering alarms, and data storage. Further, the at least one digital output 132 may be integrated with a flame and gas unit 134.

The flame detection system 100 may further include the at least one analog output 136. The at least one analog output 136 may be coupled to the one or more processors 104. The at least one analog output 136 may be in the form of voltage or current. The at least one analog output 136 may provide a continuous representation of temperature to enable real-time monitoring and analysis. In some embodiments, a level of the at least one analog output 136 may correspond to the detected temperature. Further, the at least one analog output 136 may be integrated with the flame and gas unit 134.

The flame detection system 100 may further include the at least one communication output 138. The at least one communication output 138 may be coupled to the one or more processors 104. The at least one communication output 138 may facilitate data transmission. In some embodiments, the at least one communication output 138 may include Highway Addressable Remote Transducer (HART), Modbus, TCP/IP. Further, the at least one communication output 138 may enable seamless connectivity between the flame detection system 100 and other monitoring and control devices. In some embodiments, the other monitoring and control devices may include supervisory control and data acquisition (SCADA) systems, PLCs (Programmable Logic Controllers).

In an example embodiment, the HART provides a hybrid analog and digital signal, to allow real-time measurement data and device diagnostics over a single pair of wires. In another example embodiment, the Modbus is a widely adopted serial communication protocol that allows for easy data exchange between multiple devices, making it suitable for industrial applications. In another example embodiment, the TCP/IP is a standard internet protocol suite that extends connectivity beyond the local network to enable remote monitoring and control of the flame detection system. In some embodiments, the at least one communication output 138 may be integrated with the flame and gas unit 134.

In various examples, the flame detection system 100 may be installed near the monitoring zone 114 and the flame zone 124. In some embodiments, the monitoring zone 114 may be a fire prone area, like industrial petroleum sites. In some embodiments, the flame zone 124 may be one or more flare stacks, such as flare stacks used to burn excess exhaust gases before releasing to the environment. It will be apparent to one skilled in the art that the fire prone area is an area where fires are most likely to occur or have a higher tendency to occur. In various examples, the fire prone area is an area where fire is expected to exist during normal operations. For example, fire may protrude from the one or more flare stacks during normal operation of the flare stacks.

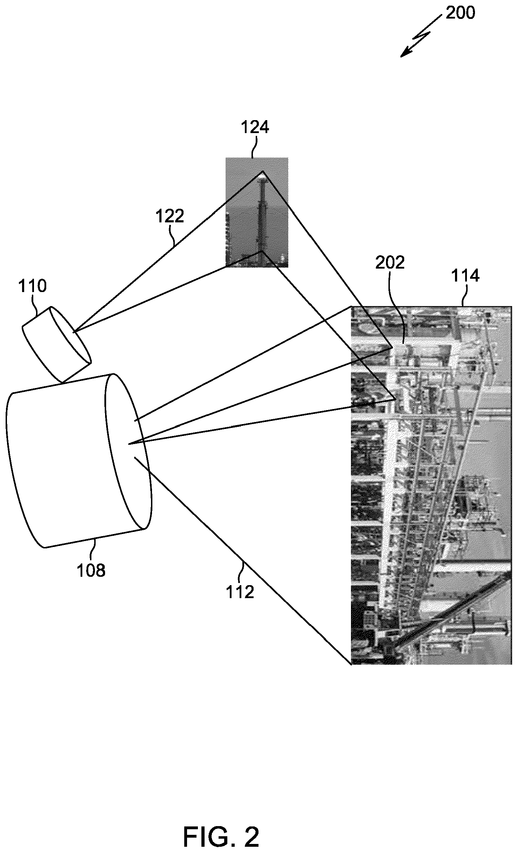

FIG. 2 illustrates an exemplary scenario 200 of the flame detection system 100, in accordance with an example embodiment of the present disclosure. FIG. 2 is described in conjunction with FIGS. 1A-1B.

As discussed above in FIGS. 1A-1B, the flame detection system 100 may comprise the at least one primary flame detector 108 and the at least one secondary flame detector 110. In the exemplary scenario 200, the at least one secondary flame detector 110 may detect one or more IR signals from the flame zone 124. Further, the at least one primary flame detector 108 may detect one or more IR signals from the monitoring zone 114. The one or more IR signals from the flame zone 124 may be reflected by an object 202 present in the monitoring zone 114. For example, the one or more IR signals from the flame zone 124 may be reflected from one or more objects 202 that are high gloss objects, such as steel pipes that are used in many industrial plants. The at least one primary flame detector 108 may detect the one or more IR signals reflected by the object 202.

In some embodiments, the one or more processors 104 may correlate the one or more IR signals reflected by the object 202 present in the monitoring zone 114 and the one or more IR signals from the flame zone 124 to determine the status of the flame within the monitoring zone 114. Further, the status of flame may correspond to the existence of hazardous flame or the reflection of the friendly flame. Further, the hazardous flame may be determined to exist in the monitoring zone 114 based on the low correlation between the one or more IR signals from the monitoring zone 114 and the one or more IR signals from the flame zone 124. Further, the existence of the reflection of the friendly flame may be determined in the monitoring zone 114 based on the high correlation between the one or more IR signals from the monitoring zone 114 and the one or more IR signals from the flame zone 124.

Further, the correlated one or more IR signals may correspond to the partially correlated one or more IR signals. Further, the one or more processors 104 may analyze the partially correlated one or more IR signals. Further, the one or more processors 104 may determine the existence of the hazardous flame or the reflection of the friendly flame based on the analyzed partially correlated one or more IR signals. The analyzed partially correlated one or more IR signals above the hazardous flame threshold value may correspond to the hazardous flame. Further, the analyzed partially correlated one or more IR signals below the hazardous flame threshold value may correspond to the reflection of the friendly flame. The hazardous flame threshold value may correspond to one or more IR signatures of the one or more IR signals from the monitoring zone 114 and the one or more IR signals from the flame zone 124. The one or more IR signatures may include at least flicker frequencies, spectral content and the ratios of different wavelengths of the one or more IR signals from the monitoring zone 114 and the one or more IR signals from the flame zone 124. For example, an analyzed partially correlated one or more IR signals is below the hazardous flame threshold value of 35 Hz flicker frequency may indicate the reflection of the friendly flame.

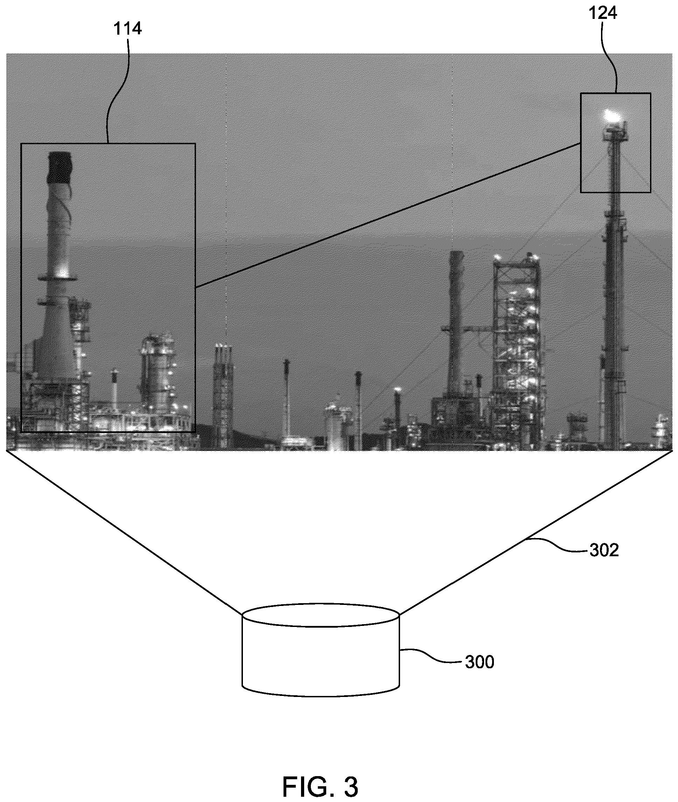

FIG. 3 illustrates an exemplary embodiment of at least one monitoring device 300 of the flame detection system 100, in accordance with another example embodiment of the present disclosure. FIG. 3 is described in conjunction with FIGS. 1A-2.

In some embodiments, the flame detection system 100 may comprise the at least one monitoring device 300. In some embodiments, the at least one monitoring device 300 may be configured to detect one or more IR signals from the monitoring zone 114 and the flame zone 124 within a FOV 302. In one example embodiment, the at least one monitoring device 300 may correspond to a camera based flame detector. In another example embodiment, the at least one monitoring device 300 may correspond to an IR sensor. Further, the at least one monitoring device 300 may be configured to identify the monitoring zone 114 and the flame zone 124 within the FOV 302 by using Artificial intelligence (AI) and Machine learning (ML) techniques. It may be noted that the friendly flame in the flame zone 124 within the FOV 302 may be rejected as the flame zone 124 and may be marked as flare stack area during installation of the at least one monitoring device 300.

Further, the one or more processors 104 may be communicatively coupled to the at least one monitoring device 300. The one or processors 104 may be configured to receive the detected one or more IR signals from the monitoring zone 114 and the flame zone 124. Further, the one or more processors 104 may correlate the one or more IR signals based at least on time and frequency domain of the detected one or more IR signals.

Further, the one or more processors 104 may determine the status of flame within the monitoring zone 114 based at least on the correlation. Further, the status of flame may correspond to the existence of the hazardous flame or the reflection of the friendly flame within the FOV 302. Further, the hazardous flame may be determined in the monitoring zone 114 based on the low correlation between the one or more IR signals from the monitoring zone 114 and the one or more IR signals from the flame zone 124. Further, the reflection of the friendly flame may be determined in the monitoring zone 114 based on the high correlation between the one or more IR signals from the monitoring zone 114 with the one or more IR signals from the flame zone 124.

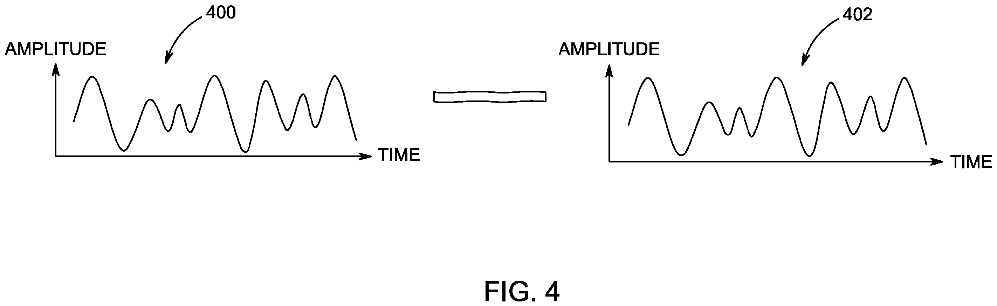

FIG. 4 illustrates one or more IR signals detected by the flame detection system 100, in accordance with an example embodiment of the present disclosure. FIG. 4 is described in conjunction with FIGS. 1A-3.

As discussed above in FIGS. 1A-3, the at least one primary flame detector may be configured to detect one or more IR signals from the monitoring zone 114. The one or more IR signals from the monitoring zone 114 may include a signal 400. Further, the at least one secondary flame detector 110 may be configured to detect one or more IR signals from the flame zone 124. The one or more IR signals from the flame zone 124 may include a signal 402. The signal 400 from the monitoring zone 144 and the signal 402 from the flame zone 124 may be a curve having high SNR. Further, the signal 400 from the monitoring zone 144 and the signal 402 from the flame zone 124 may be correlated by the one or more processors 104 based at least on time and frequency domain of the signal 400 from the monitoring zone 144 and the signal 402 from the flame zone 124 to determine the status of flame within the monitoring zone 114.

It will be apparent to one skilled in the art that the processing steps may be performed by the one or more processors 104 of the flame detection system 100 using the at least one monitoring device 102, 300 without departing from the scope of the disclosure.

In the disclosed embodiments, the flame detection system 100 may employ various signal processing techniques known in the art to determine the status of flame within the monitoring zone.

It will be apparent that the above-mentioned components of the flame detection system 100 have been provided only for illustration purposes. In another embodiment, the flame detection system 100 may include other components such as a controller unit, a microprocessor unit (MPU), a microcontroller unit (MCU), etc. without departing from the scope of the disclosure.

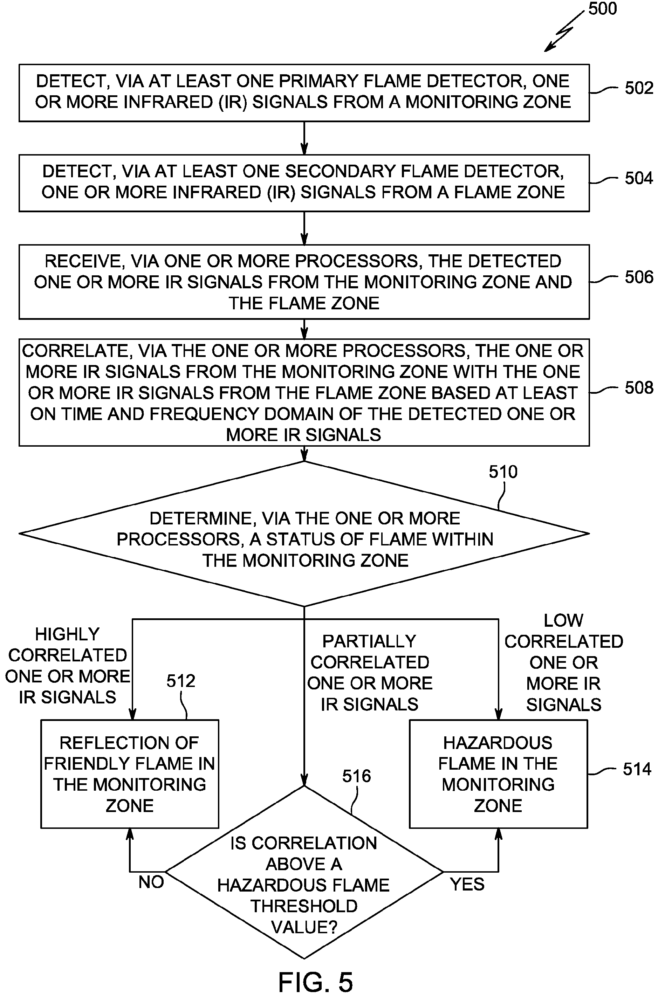

FIG. 5 illustrates a flowchart of a method 500 of the flame detection system 100, in accordance with an example embodiment of the present disclosure. FIG. 5 is described in conjunction with FIGS. 1-4.

At first, at least one primary flame detector 108 detects one or more infrared (IR) signals from the monitoring zone 114, at step 502. In some embodiments, the at least one primary flame detector 108 may correspond to a multi spectrum IR flame detector, an ultra-violet (UV) detector, a visible (VIS) detector, or an infrared (IR) detector. For example, an IR detector detects an IR signal from the monitoring zone 114.

Successively or concurrently, the at least one secondary flame detector 110 detects one or more infrared (IR) signals from the flame zone 124, at step 504. The at least one secondary flame detector 110 may be mounted onto the at least one primary flame detector 108 or proximate to the at least one primary flame detector 108. In some embodiments, the at least one secondary flame detector 110 may correspond to a multi spectrum IR flame detector, an ultra-violet (UV) detector, a visible (VIS) detector, or an Infrared (IR) detector. For example, a multi spectrum IR detector detects an IR signal from the flame zone 124.

Successively, the one or more processors 104 receives the detected one or more IR signals from the monitoring zone 114 and the flame zone 124, at step 506. In some embodiments, the monitoring zone 114 may correspond to a zone where hazardous flame could exist, and the existence is desired to be detected. In some embodiments, the flame zone 124 may correspond to a zone where friendly flame is present. For example, the one or more processors 104 receives the IR signal from the monitoring zone 114 and IR signal from the flame zone 124.

Successively, the one or more processors 104 may correlate the one or more IR signals from the monitoring zone 114 with the one or more IR signals from the flame zone 124 based at least on time and frequency domain of the detected one or more IR signals, at step 508. In some embodiments, correlation of the one or more IR signals may be based at least on one or more metrics such as signal amplitudes at different frequencies, peaks and troughs in time domain. For example, the one or more processors 104 correlates the IR signal from the monitoring zone 114 and the IR signal from the flame zone 124.

Successively, the one or more processors 104 may determine the status of flame within the monitoring zone 114 based at least on the correlation, at step 510. In some embodiments, the status may correspond to the existence of the hazardous flame or the reflection of the friendly flame. For example, based on the correlation, the one or more processors 104 determines the reflection of the friendly flame in the monitoring zone 114 because of highly correlated IR signal from the monitoring zone 114 and the IR signal from the flame zone 124. In one case, the reflection of friendly flame in the monitoring zone 114 is determined based on the highly correlated one or more IR signals, at step 512. In another case, the hazardous flame in the monitoring zone 114 is determined based on the low correlated one or more IR signals, at step 514.

In some embodiments, the correlated one or more IR signals may correspond to the partially correlated one or more IR signals. Further, the one or more processors 104 may analyze the partially correlated one or more IR signals. Successively, the one or more processors 104 may determine if the partially correlated one or more IR signals are above the hazardous flame threshold value, at step 516. In one case, if the partially correlated one or more IR signals are not above the hazardous flame threshold value, then the analyzed partially correlated one or more IR signals may correspond to the reflection of friendly flame in the monitoring zone 114, at step 512. In another case, if the partially correlated one or more IR signals are above the hazardous flame threshold value, then the analyzed partially correlated one or more IR signals may correspond to the hazardous flame in the monitoring zone 114, at step 514.

It will be appreciated that the method 500 may be implemented by one or more the embodiments disclosed herein, which may be combined or modified as desired or needed. Additionally, the steps in the method 500 may be modified, changed in order, performed differently, performed sequentially, concurrently or simultaneously, or otherwise modified as desired or needed.

It will be apparent to one skilled in the art that the above-mentioned embodiments of the present invention may be executed by the one or more processors 104 of the flame detection system 100 and the method 500 using the at least one monitoring device 102, 300 and the one or more processors 104, without departing from the scope of the disclosure.

In some embodiments, the flame detection system 100 and the method 500 may provide precise status of the flame within the monitoring zone 114. The flame detection system 100 may be installed at high risk environments such as manufacturing unit, oil refineries, coal mines, etc. to immediately alert about any hazardous flame in the monitoring zone 114 within the FOV 112. The flame detection system 100 and the method 500 may provide the status of flame without any human interference. Further, the flame detection system 100 by using AI/ML may automatically determine the status of flame within the monitoring zone 114 based at least on the correlation. Thus, the flame detection system 100 may prevent false alarms within a specific field of view.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A flame detection system comprising:
at least one monitoring device comprising:
at least one primary flame detector configured to detect one or more infrared (IR) signals from a monitoring zone; and
at least one secondary flame detector configured to detect one or more IR signals from a flame zone; and
one or more processors communicatively coupled to the at least one monitoring device, wherein the one or more processors are configured to:
receive the detected one or more IR signals from the monitoring zone and the flame zone;
correlate the one or more IR signals from the monitoring zone with the one or more IR signals from the flame zone based at least on time and frequency domain of the detected one or more IR signals; and
determine a status of flame within the monitoring zone based at least on the correlation.

2. The flame detection system of claim 1, wherein the monitoring zone corresponds to a zone where hazardous flame could exist and the flame zone corresponds to a zone where friendly flame is present.

3. The flame detection system of claim 2, wherein the status of flame corresponds to existence of the hazardous flame or a reflection of the friendly flame.

4. The flame detection system of claim 3, wherein the hazardous flame is determined in the monitoring zone based on a low correlation between the one or more IR signals from the monitoring zone and the one or more IR signals from the flame zone, and the reflection of the friendly flame is determined in the monitoring zone based on a high correlation between the one or more IR signals from the monitoring zone and the one or more IR signals from the flame zone.

5. The flame detection system of claim 1, wherein the correlated one or more IR signals correspond to a partially correlated one or more IR signals.

6. The flame detection system of claim 5, wherein the one or more processors are configured to:
analyze the partially correlated one or more IR signals; and
determine the hazardous flame or the reflection of the friendly flame based on the analyzed partially correlated one or more IR signals.

7. The flame detection system of claim 6, wherein the analyzed partially correlated one or more IR signals above a hazardous flame threshold value correspond to the hazardous flame and the analyzed partially correlated one or more IR signals below the hazardous flame threshold value correspond to the reflection of the friendly flame.

8. The flame detection system of claim 4, wherein upon detecting the highly correlated one or more IR signals, the one or more processors are configured to not actuate or prevent actuation of an alarm.

9. The flame detection system of claim 4, wherein upon detecting the low correlated one or more IR signals, the one or more processors are configured to actuate the alarm.

10. The flame detection system of claim 8, wherein the alarm corresponds to a visual alarm, an audio alarm, or a notification alarm.

11. The flame detection system of claim 1, wherein the correlation of the one or more IR signals is based at least on one or more metrics such as signal amplitudes at different frequencies, peaks and troughs in time domain.

12. The flame detection system of claim 1, wherein the at least one secondary flame detector is mounted onto the at least one primary flame detector or proximate to the at least one primary flame detector, and wherein the at least one primary flame detector and the at least one secondary flame detector corresponds to a multi spectrum IR flame detector, an ultra-violet (UV) detector, a visible (VIS) detector, or an Infrared (IR) detector.

13. The flame detection system of claim 1, wherein the at least one secondary flame detector is configured to align a field of view (FOV) towards the flame zone, and the at least one secondary flame detector is configured to have a narrow FOV to cover the flame zone.

14. A flame detection system comprises:
at least one monitoring device configured to detect one or more infrared (IR) signals from a monitoring zone and a flame zone; and
one or more processors communicatively coupled to the at least one monitoring device, wherein the one or processors are configured to:
receive the detected one or more IR signals from the monitoring zone and the flame zone;
correlate the one or more IR signals from the monitoring zone with the one or more IR signals from the flame zone based at least on time and frequency domain of the detected one or more IR signals; and
determine a status of flame within the monitoring zone based at least on the correlation.

15. The flame detection system of claim 14, wherein the at least one monitoring device corresponds to a camera based flame detector.
